# NEUE EUROPÄISCHE PATENTSCHRIFT

(11) **EP 2 001 643 B2**
(45) Veröffentlichungstag und Bekanntmachung des Hinweises auf die Entscheidung über den Einspruch: **04.09.2013**
(45) Hinweis auf die Patenterteilung: 29.07.2009
(21) Anmeldenummer: 07722128.1
(22) Anmeldetag: 28.03.2007
(51) Int. Cl.: B27K 3/36, C08J 3/03, C08L 91/06, C08L 97/02

(54) **NANO-PARTIKULÄRE WACHSDISPERSIONEN, VERFAHREN ZU DEREN HERSTELLUNG UND VERFAHREN ZUR HYDROPHOBIERUNG VON WERKSTOFFEN MIT DIESEN**
NANOPARTICULATE WAX DISPERSIONS, PROCESS FOR PREPARING THEM AND METHOD OF HYDROPHOBICIZING MATERIALS USING THEM
DISPERSIONS DE CIRES NANOPARTICULAIRES, LEUR PROCEDE DE FABRICATION ET PROCEDE DE TRAITEMENT HYDROPHOBE DE MATERIAUX AVEC CES DISPERSIONS

(30) Priorität: 31.03.2006 DE 102006015517
(43) Veröffentlichungstag der Anmeldung: 17.12.2008
(73) Patentinhaber: Sasol Wax GmbH, 20457 Hamburg (DE)
(72) Erfinder: BUCHHOLZ, Thomas, 21391 Reppenstedt (DE); SCHEIDAT, Hans, Jörg, 22844 Norderstedt (DE)
(74) Vertreter: Müller Schupfner & Partner
(86) Internationale Anmeldenummer: PCT/DE2007/000570
(87) Internationale Veröffentlichungsnummer: WO 2007/115534

(56) Entgegenhaltungen:
- WO-A1-03/045646
- DE-A1- 19 546 073
- DE-A1- 19 837 191
- US-A- 2 993 800
- US-A1- 2004 044 108
- US-A1- 2004 265 729
- US-B1- 6 274 199

## Beschreibung

Die Erfindung betrifft die Verwendung nano-partikulärer Wachsdispersionen, eine Zusammensetzung zur Herstellung von Holzwerkstoffen und ein Verfahren zur Hydrophobierung von Werkstoffen auf Basis von Lignocellulosen durch Kontaktierung mit den Wachsdispersionen.

Vielfach ist es gewünscht Wasseraufnahme und Quellneigung von saugfähigen Werkstoffen, wie Holzwerkstoffen zu reduzieren oder es machen gesetzliche oder auch Kunden-Anforderungen das Unterschreiten von Grenzwerte für die Wasseraufnahme und das Quellenvermögen derartiger Werkstoffe oder deren Weiterverarbeitungsprodukte notwendig. Nach in Europa geltenden Normen (DIN EN 622 und DIN EN 312) müssen z.B. Holzwerkstoffe bestimmten Anforderungen in Bezug auf die Dickenquellung bei Unterwasserlagerung und hinsichtlich der Wasseraufnahme genügen.

Um die geforderten Grenzwerte einzuhalten, werden viele saugfähige Werkstoffe beim Produktionsprozess mit Hydrophobierungsmitteln versehen. Hierbei soll das Hydrophobierungsmittel seinerseits keinen unnötigen Wassereintrag notwendig machen und die Weiterverarbeitung des Werkstoffs nicht behindern, wenn die hydrophobierten Einsatzstoffe in Form von Spänen, Strands oder Fasern vorliegen und die Weiterverarbeitungsprodukte durch Zusammenfügen aus den Strands, Spänen oder Fasern hergestellt sind, z.B. mittels thermischem Abbinden, Verpressen oder Verkleben mit entsprechenden Bindemitteln.

Die Anwendung von Wachsen auf bzw. in derartigen Werkstoffen bzw. deren Einsatzstoffen enthaltend bzw. bestehend aus Lignocellulosen als Hydrophobierungsmittel, auch in Form wässriger Dispersionen, ist an sich bekannt. Die Optimierung der Hydrophobierwirkung von Wachsdispersionen beim Einsatz z.B. in Holzwerkstoffen wurde bisher im Wesentlichen durch Modifikation der Zusammensetzung der Wachsphase herbeigeführt (vergleiche EP 1 448 345-B1).

Zur Hydrophobierung von aus Lignocellulosen bestehenden Holzwerkstoffen mit Paraffin sind eine Reihe von Untersuchungen bekannt. Hierzu ist z.B. auf den Aufsatz von Roffael, E., Schriever, E., May, H.-A., Adhäsion 11(1982), S.10-19, "Hydrophobierung von Spanplatten mit Paraffin", Teil 1 und auf die Veröffentlichung von May, H.-A.und Roffael, E. "Hydrophobierung von Spanplatten mit Paraffinen", Teil 4 (Adhäsion 28, (1,2), 17-21) hinzuweisen. Jedoch sind weitere Verbesserungen wünschenswert.

Aufgabe der vorliegenden Erfindung ist es, ein Hydrophobierungsmittel in Form einer wasserbasierten Wachsdispersion zu entwickeln zur Verwendung in Holzwerkstoffen, das bessere Hydrophobierungswirkung bei gleicher Zugabemenge Wachs, verglichen mit konventionellen Wachsdispersionen aufweist, bzw. bei gleicher angestrebter Hydrophobierung eine verminderte Zugabe an Hydrophobierungsmittel ermöglicht. Gleichzeitig sollen die wasserbasierten Wachsdispersionen einen hohen Gewichtsanteil disperse Wachsphase haben, lagerstabil und scherstabil sein.

Obige Aufgabe ist gelöst durch den Gegenstand der unabhängigen Ansprüche. Bevorzugte Ausführungsformen sind Gegenstand der Unteransprüche oder nachfolgend beschrieben.

Die Wachsdispersionen weisen auf:
- von kleiner 60 Gew.% bis 20 Gew.% Wasser als kontinuierliche Phase,
- von größer 0,5 bis 10 Gew.% zumindest einen Emulgator, und
- von größer 40 bis 80 Gew.% Wachse bildend die disperse Phase , wobei
   die Wachse zu größer 85 Gew.%, vorzugsweise zu größer 99,8 Gew.%, ein oder mehrere langkettige Kohlenwasserstoffe mit im Mittel mehr als 20 Kohlenstoffatomen sind,
- die Wachse einen Erstarrungspunkt von größer 40 bis 150 °C aufweisen und
- die dispergierten Wachse als Feststoffteilchen einen mittleren Teilchendurchmesser von 10 bis kleiner 500 nm aufweisen.

Besonders geeignet sind obige Wachsdispersion mit
- von kleiner 60 bis 20 Gew.%, insbesondere von kleiner 50 bis 30 % oder sogar nur 40 bis 20 Gew.%, Wasser als kontinuierliche Phase,
- von größer 0,5 bis 6 Gew.% einen Emulgator und
- von größer 40 bis 80 Gew.%, insbesondere von größer 50 bis 70 Gew.%, oder sogar 60 bis 80 Gew.%, Wachsfeststoffe als disperse Phase.

Der Emulgator umfasst oder besteht vorzugsweise aus einem oder mehreren anionischen Emulgatoren. Dies können Fettsäuren, verseifte Fettsäuren und/oder Fettsäuren-Derivate aufweisend Carboxylgruppen ggf. verseift sein.

Die kontinuierliche Phase der Wachsdispersionen ist Wasser, die diskontinuierliche Phase das Wachs, wobei das Wachs im Wesentlichen, vorzugsweise vollständig, aus langkettigen Kohlenwasserstoffen besteht. Kohlenwasserstoffe im Sinne der vorliegenden Erfindung sind Verbindungen die ausschließlich aus Kohlenstoff und Wasserstoff bestehen und Erstarrungspunkte von größer 40 bis 150 °C, vorzugsweise 40 bis 100 °C (bei Normaldruck) aufweisen, insbesondere bei mittleren C-Zahlen von 20 bis 100 Kohlenstoffatomen, insbesondere 20 bis 50 Kohlenstoffatomen. Als Kohlenwasserstoffe kommen gesättigte oder ungesättigte Kohlenwasserstoffe, vorzugsweise gesättigte Kohlenwasserstoffe in Frage.

Das Wachs kann ein erdölbasiertes Paraffinwachs, ein Fischer-Tropsch Wachs, ein Polyolefinwachs sein, aus Mischungen dieser bestehen und/oder ein Raffinationsprodukte dieser sein. Nachfolgend sind für den erfindungsgemäßen Einsatz geeignete Typen beschrieben.

Die langkettigen gesättigten aliphatischen Kohlenwasserstoffe werden häufig als Paraffinwachse bezeichnet. Die in der Industrie üblicherweise verwendeten Paraffinwachse sind Produkte der Erdölraffination und bestehen hauptsächlich aus Mischungen von bei über 40°C festen n- und iso-Alkanen unterschiedlicher Mengenverhältnisse.

Die einsetzbaren Paraffinwachse können in makro- und mikrokristalline Wachse eingeteilt werden. Makrokristalline Wachse bestehen vorwiegend aus gesättigten, geradkettigen, unverzweigten Kohlenwasserstoffen (n-Alkane) und besitzen ein Molekulargewicht, das etwa zwischen 280 und 700 (g/mol) liegt (Anzahl der Kohlenstoffatome in der Kette zwischen 20 und etwa 50).

Im Unterschied zu den makrokristallinen Paraffinen bestehen die mikrokristallinen Paraffine vorwiegend aus verzweigen Alkanen (iso-Alkane) und gesättigten ringförmigen Kohlenwasserstoffen (Cycloalkane). Der Schmelzbereich liegt zwischen 60°C und 90 °C. Mikrokristalline Paraffine sind auch durch Hydroisomerisierung von Fischer-Tropsch-Wachsen zugänglich.

Die Dispersion wird mit einem Emulgator stabilisiert. Emulgatoren sind grenzflächenaktive amphotere Substanzen oder hochmolekulare Substanzen. Der Emulgator kann anionisch, kationisch, nicht-ionogen oder von Betain-Struktur sein, vorzugsweise anionisch. Als Emulgatoren seien genannt:
- Alkoholpolyethylenglykolether, z.B. solche der allgemeinen Formel R-O-(R¹-O)ₙ-H,
- Fettsäureesterpolyethylenglykolether, z.B. solche der allgemeinen Formel R-COO-(R¹-O)ₙ-H,
- Alkylpolyalkylenglykolethercarbonsäuren, z.B. solche der allgemeinen Formel R-O-(R¹-O)ₙ-CH₂-COOH bzw. deren Alkanolammonium- oder Alkali- oder Erdalkalimetallsalze,
- Alkylamidoalkylbetaine, z.B. solche der allgemeinen Formel R-CONH(CH₂)ᵤN⁺(CH₃)₂- CH₂-COO⁻,
- Aminoxide, z.B. solche der allgemeinen Formel R-NO(CH₃)₂,
   wobei jeweils
   R einen verzweigten oder linearen, gesättigten oder ungesättigten C₈- bis C₂₀- bzw. C₇- bis C₁₉- Kohlenwasserstoffrest,
   n eine Zahl von 2 bis 20,
   R¹ einen Alkylenrest mit 2 bis 4 Kohlenwasserstoffen, z.B. -C₂H₄- oder -C₃H₆-, ggf. für jedes n verschieden, und
   u eine Zahl von 1 bis 10 darstellt,
- Produkte aus der Alkoxylierung von Triglyceriden, die ganz oder teilweise mit C₆-bis C₂₂ - Fettsäuren verestert sind, wobei pro Mol Triglycerid 2 bis 40 Mol Alkoxylierungsmittel eingesetzt werden,
- partiell neutralisierte Partialglyceride von ein oder mehrwertigen C2- bis C22-Carbonsäuren, wie z.B. Linolsäure, Stearinsäure, Isostearinsäure, Palmitinsäure, Laurinsäure, Caprylsäure, Caprinsäure, Citronensäure und/oder Milchsäure,
- Ester des Polyglycerins, worin die Carbonsäure-Gruppe vorzugsweise 2 bis 22 Kohlenstoffatome aufweist,
- C6- bis C32- Carbonsäuren, insbesondere C8- bis C26- Fettsäuren vollständig oder partiell, insbesondere vollständig verseift, z.B. mit Aminen oder Aminverbindungen wie Diethanolamin.

Emulgatoren im Sinne der Erfindung sind auch hochmolekulare Substanzen wie Gummi Arabicum, Gum Ghatti oder Celluloseverbindungen.

Möglich sind auch Emulgator-Gemische, z.B ein anionischer und ein nicht-ionischer oder ein anionischer und ein hochmolekularer Emulgator. Die Emulgatoren sind zu größer 0.5 bis 10 Gew.%, insbesondere zu 2 bis 6 Gew.%, bezogen auf die Gesamtzusammensetzung zugesetzt. Bevorzugt werden anionische Emulgatoren eingesetzt, insbesondere ausschließlich anionische Emulgatoren (d.h. keine weiteren Tenside oder Emulgatoren bzw. soweit diesbezüglich Gew.%-Angaben gemacht sind, beziehen sich diese auf die Summe der Emulgatoren und Tenside). Gegenüber dem PIT-Verfahren zur Herstellung von Emulsionen werden mit dem erfindungsgemäßen Verfahren überraschend geringere Einsatzmengen an Emulgatoren benötigt. Dies ist von Vorteil für den Einsatz der Wachsdispersionen als Hyrophobierungsmittel.

In herkömmlichen Wachsdispersionen liegen die Teilchen in Größen von einigen µm bis über 500 µm vor. Je nach eingesetztem Emulgator / Stabilisatorsystem zeigen sie eine hohe Anfälligkeit gegen Scherkräfte. Dies macht eine sorgfältige Auswahl der eingesetzten Pumpen erforderlich.

Gegenstand der Erfindung ist die Verwendung wässriger Wachsdispersionen, welche als disperse Phase Feststoffteilchen mit mittleren Teilchendurchmessern von 10 bis 500 nm, vorzugsweise 50 bis 250 nm, und insbesondere 100 bis 200 nm aufweisen.

Der Emulgierprozess gliedert sich i.d.R. in folgende Abschnitte: Vormischen der einzelnen Komponenten zu einer grobdispersen Voremulsion (Premix) und Feinemulgieren durch Tropfenaufbruch beim Überschreiten der kritischen Deformation und Stabilisieren der neu entstandenen Phasengrenzflächen durch den Emulgator.

Als Emulgierapparat sei ein Rotor-Stator-Mixer genannt. Die zerkleinerungswirksame Energie wird durch rotierende Teile eingebracht. Sie können batch-weise oder quasikontinuierlich betrieben werden und ermöglichen die Kombination verschiedener Verfahrensschritte in einem Prozessapparat (wie das Mischen der Komponenten, das Emulgieren und eine gezielte Temperaturführung zum Pasteurisieren und/oder Abkühlen).

Hochdruckhomogenisatoren basieren auf einer Hochdruckpumpe und einer Homogenisierdüse. Die Hochdruckpumpe baut die Energie auf, die dann durch Entspannen im Homogenisierventil zur Tropfenzerkleinerung genutzt werden kann.

Drücke von hundert bis einige hundert bar sind in den Hochdruckhomogenisatoren anwendbar, in Spezialfällen bis zu tausend bar. Die Rohemulsion wird durch eine zentrische Zulaufbohrung gepumpt und durchläuft dann den Radialspalt zwischen Ventilsitz und Ventilstempel. Um kleine Tropfen und eine enge Verweilzeitverteilung erreichen zu können, sind eine Vielzahl verschiedener Düsengeometrien möglich. Beispiele für geeignete Radialdiffusoren sind die Flachdüse, die Zackendüse und die Messerkantendüse.

In Gegenstrahldispergatoren (Nanojete, Microfluidizer®) treffen zwei oder mehr Strahlen der Rohemulsion aus mindestens zwei gegenüberliegenden Bohrungen oder Kanälen aufeinander. Daneben kann auch ein Strahldispergator oder eine einfache Lochblende bzw. eine Kombination mehrerer Lochblenden unterschiedlichen Durchmessers als Homogenisierdüse verwendet werden. Gegenstrahldispergatoren haben keine beweglichen Teile und sind einfach aufgebaut.

Die vorliegenden Wachse, die sich mit konventionellen Mahltechniken nur schwer zerkleinern lassen, lassen sich durch Schmelzeemulgieren in feinteilige Dispersionen überführen, z.B. mittels eines Hochdruckhomogenisators und einem Homogenisierdruck von 120 bar.

Paraffine als Festwachs oder in Form von Dispersionen werden bei der Herstellung von Holzwerkstoffen auf Basis von Strands, Spänen oder Fasern zugegeben, um deren Hydrophobierung, insbesondere in Form von Platten, zu bewirken und vor allem die Wasseraufnahme und das hierdurch verursachte Quellen zu verringern. Als Messwert wird häufig die Dickenquellung nach 2 h bzw. nach 24 h Lagerung in Wasser herangezogen (z.B. nach DIN EN 622 und DIN EN 312).

Die Hydrophobierung soll einer Verringerung der mechanischen Festigkeiten unter dem Einfluss der Feuchtigkeit entgegenwirken und Längen- oder Dickenausdehnungen bei höheren Umgebungsfeuchten vermeiden helfen.

Die Paraffinwachse verlangsamen die Wasseraufnahme und die Dickenquellungsgeschwindigkeit bei Unterwasserlagerung. Neben der eigentlichen Hydrophobierungswirkung verbessern die Paraffinwachse auch die Gleitfähigkeit der Späne, Strands oder Fasern. Dies wirkt sich positiv auf die Förderbarkeit und Streufähigkeit der Späne, Strands oder Fasern aus.

Das direkte Aufbringen heißer aufgeschmolzener Paraffinwachse hat den Vorteil der Einsparung an Emulgatoren und Stabilisatoren und macht gegenüber wässrigen Dispersionen keine Wasserzugabe mit dem Wachs während der Zugabe erforderlich. Nachteil ist das Erfordernis der geheizten Leitungs- und Dosiersysteme sowie die schwierigere gleichmäßige Verteilung der volumenmäßig geringen Menge an Paraffinwachsen auf den Spänen. Der Emulgator wirkt der Hydrophobierung i.d.R. entgegen. Ziel ist des deshalb, bei der Dispersion mit möglichst wenig Emulgator auszukommen.

Vorliegend werden die Paraffinwachse in Form einer wässrigen Dispersion auf die Späne aufgebracht. Die Paraffinwachsdispersionen können sowohl als Gemisch mit dem Bindemittel aufgedüst werden als auch getrennt vor oder nach der Bindemittelzugabe auf die Späne, Strands oder Fasern aufgebracht werden.

Die Paraffinwachse sollen keine oder wenig Einfluss auf das Abbinden der Deckschicht- (DS) und/oder Mittelschichtleime haben. Gängig sind säurehärtende Harnstoffstoffformaldehydharze, alkalisch härtende Phenolformaldehydharze, PMDI oder Tanninformaldehydharze.

### Versuchsbeschreibung

Es wurde eine wässrige Paraffinwachsdispersion mit 60 Gew.% Feststoffgehalt auf Basis eines erdölbasierten Wachses hergestellt. Zur Herstellung einer Vordispersion (Premix) wurde die erforderliche Menge Wasser mit einer Temperatur von ca. 80°C in einen Rührkessel gegeben.

Der Emulgator (eine C20-Fettsäure und Diethanolamin) wurde unter Rühren zum Wasser gegeben und zur Reaktion gebracht. Danach wurde die entsprechende Menge geschmolzenes Paraffinwachs unter Rühren zugegeben. Unter Rühren hat sich nach ca. 5 Minuten eine Voremulsion gebildet.

Die Voremulsion wurde nun mit einem Hochdruckhomogenisator mit Zackendüse bei ca. 120 bar mit anschließender Kühlung zur Wachsdispersion (A) weiterverarbeitet. Ein Teil der Wachsdispersion (A) wurde erhitzt und zur weiteren Verringerung der Partikelgröße mit einem Gegenstrahldispergator (Microfluidizer®) bei 1000 bar und anschließender Kühlung zur Wachsdispersion (B) weiterverarbeitet.

Die Partikelgrößenverteilung wurde nach dem Prinzip der Laserbeugung bestimmt

### (A) Hydrophobierung von Holzfasern

Es wurden jeweils 0,5 Gew.% obiger Paraffinwachsdispersion bezogen auf den Faserstoff auf Prüfblätter aufgesprüht. Anschließend wurde der Faserstoff bei 90°C getrocknet und die Wachsdispersion zum Ausflocken gebracht. Die Faserstoffe wurden nun nach der von E. Raffael, et al. (Holz als Roh- und Werkstoff, Band 60 (2002), S.347-348, Springer Verlag) beschriebenen Methode zur Erfassung der Benetzbarkeit von Holzfasern untersucht. Es wurden 10 Messungen pro Variante durchgeführt. Die Prüfblätter wurden 24h im Normklima (20°C/65% rel. Luftfeuchte gern. DIN 50014), gelagert. Je langsamer das Eindringen der Wassertropfen in die hergestellten Prüfblätter, desto stärker ist die Hydrophobierwirkung der Paraffinwachsdispersion.

Überraschend hat sich gezeigt, dass diese neuen Dispersionen eine wesentlich verbesserte Hydrophobierwirkung entfalten und länger lagerfähig sind, als gleichartige Wachsdispersionen mit herkömmlicher Partikelgröße. Die Benetzungszeit konnte durch eine Verringerung der Partikelgröße gegenüber gleicher Dispersion mit üblicher Partikelgröße um 38% verbessert werden.

### Gegenüberstellung Kenndaten der Dispersionen

**Tabelle 1**

| | **A** | **B** |
|---|---|---|
| Wasser | 40 Gew.% | 40 Gew.% |
| Wachs (erdölbasiertes Paraffinwachs) | identisch | |
| Emulgator | 5 Gew.% | 5 Gew.% |
| Emulgator *anionisch* gemäß Beispiel | identisch | |
| Partikelgröße: | ca. 1 µm | ca. 150 nm |
| Viskosität (25°C, Brookfield): | 1760 mPas | 2060 mPas |
| Zentrifugentest 1h | 1 % | 0 % |
| Zentrifugentest 4h | 4 % | <0,5 % |
| Verlängerung der Benetzbarkeit | + 7,9 sec. | + 10,9 sec. |

**Tabelle 2**

| Dispersionen | | |
|---|---|---|
| Probe A mittlerer Teilchendurchmesser ca. 1 Mikron | | |
| Probe B mittlerer Teilchendurchmesser ca. 150 nm | | |
| | **A** | **B** |
| | µm | µm |
| x_{10,3} | 0,576 | 0,0932 |
| x_{50,3} | 1,094 | 0,185 |
| x_{90,3} | 1,669 | 0,400 |
| X_{3,2} | 0,941 | . 0,163 |

*x_{10,3} , x_{50,3} und x_{90,3} bezeichnen den Gewichtsanteil des Partikelkollektivs, die den angegebenen Teilchendurchmesser unterschreiten, X_{3,2} bezeichnet den Sauterdurchmesser*

Die Zentrifuge hatte g=3200. Eine Probe der Emulsion wird über 1 bzw. 4 h einer Erdbeschleunigung von g=3200 ausgesetzt. Der Anteil des separierten Wassers wird in % der Probenhöhe ermittelt. Der Zentrifugentest ist ein gutes Maß für die Lagerstabilität der Emulsion. Die Benetzbarkeit misst den Zeitraum vom Auftragen eines eingefärbten Wassertropfens bis zum vollständigen Eindringen. Die Benetzbarkeit ist eine Methode zur Beurteilung der Hydrophobierung.

## Patentansprüche

1. Verwendung einer Wachsdispersion als Hydrophobierungsmittel für Lignocellulosen in Form von Fasern, Spänen oder Strands, wobei die Wachsdispersion aufweist
• von kleiner 60 Gew.% bis 20 Gew.% Wasser als kontinuierliche Phase,
• von größer 0,5 bis 10 Gew.% zumindest einen Emulgator und
• von größer 40 bis 80 Gew.% Wachse bildend die disperse Phase, wobei
• die Wachse zu größer 85 Gew.% ein oder mehrere langkettige Kohlenwasserstoffe mit im Mittel mehr als 20 Kohlenstoffatomen sind,
• die Wachse einen Erstarrungspunkt von größer 40 bis 150 °C aufweisen und
• die dispergierten Wachse als Feststoffteilchen einen mittleren Teilchendurchmesser von 10 bis kleiner 500 nm aufweisen,
wobei unter Kontaktieren der Fasern, Späne oder Strands mit der Wachsdispersion zur Aufbringung des Wachses als Wachsfeststoffe auf die Fasern, Späne oder Strands und Verpressen ein Holzwerkstoff erhalten wird, enthaltend die Fasern, Späne oder Strands und ggf. weitere Bestandteile und wobei bezogen auf das Trockengewicht des Holzwerkstoffes 0,1 bis 5 Gew.% Wachsfeststoffe eingebracht sind.

2. Verwendung der Wachsdispersion nach Anspruch 1, **dadurch gekennzeichnet, dass** die Wachsdispersion aufweist
• von kleiner 50 bis 30 Gew.% Wasser als kontinuierliche Phase,
• von größer 0,5 bis 6 Gew.% einen Emulgator und
• von größer 50 bis 70 Gew.% Wachsfeststoffe als disperse Phase.

3. Verwendung der Wachsdispersion nach zumindest einem der vorhergehenden Ansprüche, **dadurch gekennzeichnet, dass** die Wachse langkettige gesättigte Kohlenwasserstoffe, Fischer-Tropsch-Wachse, Polyolefinwachse und/oder aus Erdöl gewonnene Paraffinwachse sind.

4. Verwendung der Wachsdispersion nach zumindest einem der vorhergehenden Ansprüche, **dadurch gekennzeichnet, dass** die Kohlenwasserstoffe zu größer 60 Gew.%, vorzugsweise zu größer 80 Gew.%, n-Alkane sind.

5. Verwendung der Wachsdispersion nach zumindest einem der vorhergehenden Ansprüche, **dadurch gekennzeichnet, dass** die Wachsfeststoffe einen Erstarrungspunkt von größer 40 bis 100 °C aufweisen.

6. Verwendung der Wachsdispersion nach zumindest einem der vorhergehenden Ansprüche, **dadurch gekennzeichnet, dass** die Emulgatoren anionische Emulgatoren sind, vorzugsweise auf Basis von Fettsäuren, verseiften Fettsäuren und/oder FettsäureDerivaten, ggf. verseift.

7. Verwendung der Wachsdispersion nach zumindest einem der vorhergehenden Ansprüche, **dadurch gekennzeichnet, dass** die Feststoffteilchen mit einem mittleren Teilchendurchmesser von 10 bis kleiner 250 nm, insbesondere 100 bis 200 nm, in der kontinuierlichen Phase dispergiert sind.

8. Verwendung der Wachsdispersion nach zumindest einem der vorhergehenden Ansprüche enthaltend größer 0,5 bis kleiner 6 Gew.% Emulgator.

9. Verwendung der Wachsdispersion nach zumindest einem der vorhergehenden Ansprüche, **dadurch gekennzeichnet, dass** die eingesetzten Emulgatoren zu größer 50 Gew.%, bezogen auf die eingesetzten Emulgatoren und/oder Tenside, vorzugsweise vollständig, aus C6- bis C32- Carbonsäuren bestehen, vollständig oder partiell, insbesondere vollständig verseift, vorzugsweise mit Aminen oder Aminverbindungen.

10. Verfahren zum Hydrophobieren von Holzwerkstoffen hergestellt unter Verwendung von Fasern, Spänen oder Strands enthaltend oder bestehend jeweils aus Lignocellulosen mit einer Wachsdispersion, **dadurch gekennzeichnet, dass** die Wachsdispersion Wasser, Emulgator und Wachse mit einem Erstarrungspunkt von größer 40 bis 150°C enthält, wobei die Wachse ein oder mehrere langkettige Kohlenwasserstoffe mit im Mittel mehr als 20 Kohlenstoffatomen umfassen, und in Form von Feststoffteilchen mit einem mittleren Teilchendurchmesser von 10 bis kleiner 500 nm in der kontinuierlichen Phase dispergiert sind, und das Verfahren die folgenden Schritte umfasst:
(a) Bereitstelle der Wachsdispersion,
(b) Kontaktieren der Fasern, Späne oder Strands mit der Wachsdispersion zur Aufbringung des Wachses auf die Fasern, Späne oder Strands und
(c) Verpressen zum Holzwerkstoff enthaltend die Fasern, Späne oder Strands und ggf. weitere Bestandteile,
wobei bezogen auf das Trockengewicht des Holzwerkstoffes 0,1 bis 5 Gew.% Wachsfeststoffe eingebracht sind und wobei eine Wachsdispersion eingesetzt wird aufweisend
• von kleiner 60 Gew.% bis 20 Gew.% Wasser als kontinuierliche Phase,
• von größer 0,5 bis 10 Gew.% zumindest einen Emulgator und
• von größer 40 bis 80 Gew.% Wachse bildend die disperse Phase, wobei
• die Wachse zu größer 85 Gew.% ein oder mehrere langkettige Kohlenwasserstoffe mit im Mittel mehr als 20 Kohlenstoffatomen sind.

11. Verfahren gemäß Anspruch 10, **dadurch gekennzeichnet, dass** das Kontaktieren der Fasern, Späne oder Strands in rieselfähiger Form durch Versprühen der Wachsdispersion erfolgt.

12. Verfahren gemäß Anspruch 10, **dadurch gekennzeichnet, dass** das Kontaktieren der Fasern, Späne oder Strands in Wasser eingebracht bzw. aufgeschlämmt mit der Wachsdispersion erfolgt und ggf. die Wachsdispersion zur Anlagerung auf die Fasern, Späne oder Strands aufgebrochen wird.

13. Verfahren gemäß zumindest einem der Ansprüche 10 bis 12, **dadurch gekennzeichnet, dass** die Holzwerkstoffe enthaltend Fasern, Späne und/oder Strands mitteldichte Faserplatten, hochdichte Faserplatten, OSB (Oriented Strand Boards) oder Spanplatten sind.

14. Verfahren gemäß zumindest einem der Ansprüche 10 bis 13, **dadurch gekennzeichnet, dass** bezogen auf das Trockengewicht des Holzwerkstoffes 0,5 bis 2,5 Gew.% Wachsfeststoffe eingebracht sind.

15. Zusammensetzung zur Herstellung von Holzwerkstoffen, wobei die Zusammensetzung aufweist
• Fasern, Späne oder Strands enthaltend oder bestehend aus Lignocellulosen,
• zumindest ein Bindemittel zum Zusammenfügen der Fasern, Späne oder Strands und
• zumindest ein Hydrophobierungsmittel,
**dadurch gekennzeichnet, dass** das Hydrophobierungsmittel aufweist
• von kleiner 60 Gew.% bis 20 Gew.% Wasser als kontinuierliche Phase,
• von größer 0,5 bis 10 Gew.% zumindest einen Emulgator und
• von größer 40 bis 80 Gew.% Wachse bildend die disperse Phase , wobei
• die Wachse zu größer 85 Gew.% ein oder mehrere langkettige Kohlenwasserstoffe mit im Mittel mehr als 20 Kohlenstoffatomen sind,
• die Wachse einen Erstarrungspunkt von größer 40 bis 150 °C aufweisen und
• die dispergierten Wachse als Feststoffteilchen einen mittleren Teilchendurchmesser von 10 bis kleiner 500 nm aufweisen,
• wobei bezogen auf das Trockengewicht des Holzwerkstoffes 0,1 bis 5 Gew.% Wachsfeststoffe eingebracht sind.

16. Zusammensetzung gemäß Anspruch 15, **dadurch gekennzeichnet, dass** das Bindemittel säurehärtende Harnstoffformaldehydharze, alkalisch härtende Phenolaldehydharze, PMDI oder Tanninformaldehydharze umfasst.

## Claims

1. Use of a wax dispersion as hydrophobing agent for lignocelluloses in the form of fibers, chippings or strands, the wax dispersion comprising
• from less than 60% by weight to 20% by weight of water as continuous phase,
• from greater than 0.5 to 10% by weight of at least one emulsifier, and
• from greater than 40 to 80% by weight of waxes forming the dispersed phase, wherein
• the waxes consist to greater than 85% by weight of one or more long-chain hydrocarbons having on average more than 20 carbon atoms,
• the waxes have a solidification point of greater than 40 to 150 °C, and
• the dispersed waxes have as solid particles an average particle diameter of 10 to less than 500 nm,
wherein by contacting the fibers, chippings or strands with the wax dispersion by applying the wax as wax solids to the fibers, chippings or strands, and compressing a wood material is obtained comprising the fibers, chippings or strands and optionally additional ingredients, and wherein based on the dry weight of the wood material 0.1 to 5 % by weight of wax solids are introduced.

2. The use of the wax dispersion according to claim 1, **characterized in that** the wax dispersion comprises
• from less than 50 to 30% by weight of water as continuous phase,
• from greater than 0.5 to 6% by weight of one emulsifier, and
• from greater than 50 to 70% by weight of wax solids as dispersed phase.

3. The use of the wax dispersion according to at least one of the preceding claims, **characterized in that** the waxes are long-chain saturated hydrocarbons, Fischer-Tropsch waxes, polyolefin waxes and/or paraffin waxes obtained from petroleum.

4. The use of the wax dispersion according to at least one of the preceding claims, **characterized in that** the hydrocarbons consist to greater than 60% by weight, preferably greater than 80% by weight of n-alkanes.

5. The use of the wax dispersion according to at least one of the preceding claims, **characterized in that** the wax solids have a solidification point of greater than 40 to 100°C.

6. The use of the wax dispersion according to at least one of the preceding claims, **characterized in that** the emulsifiers are anionic emulsifiers, preferably on the basis of fatty acids, saponified fatty acids and/or fatty acid derivatives that are optionally saponified.

7. The use of the wax dispersion according to at least one of the preceding claims, **characterized in that** solid particles with an average particle diameter of 10 to less than 250 nm, more preferably 100 to 200 nm, are dispersed in the continuous phase.

8. The use of the wax dispersion according to at least one of the preceding claims containing greater than 0.5 to less than 6% by weight of emulsifier.

9. The use of the wax dispersion according to at least one of the preceding claims, **characterized in that** the emulsifiers used consist to greater than 50% by weight, based on the emulsifiers and/or surfactants used, preferably completely, of C6-to C32-carboxylic acids that are completely or partially, more preferably completely saponified, preferably with amines or amine compounds.

10. A method for hydrophobing wood materials produced using fibers, chippings or strands that each contain or consist of lignocelluloses with a wax dispersion, **characterized in that** the wax dispersion contains water, emulsifier and waxes having a solidification point of greater than 40 to 150°C, the waxes comprising one or more long-chain hydrocarbons having on average more than 20 carbon atoms and being dispersed in the continuous phase in the form of solid particles having an average particle diameter of 10 to less than 500 nm, and the method comprises the following steps:
(a) providing the wax dispersion,
(b) contacting the fibers, chippings or strands with the wax dispersion in order to apply the wax to the fibers, chippings or strands, and
(c) compressing to form a wood material containing the fibers, chippings or strands and optionally additional ingredients,
wherein based on the dry weight of the wood material 0.1 to 5 % by weight of wax solids are introduced and
wherein a wax dispersion is used that comprises
• from less than 60% by weight to 20% by weight of water as continuous phase,
• from greater than 0.5 to 10% by weight of at least one emulsifier, and
• from greater than 40 to 80% by weight of waxes forming the dispersed phase, where
• the waxes consist to greater than 85% by weight of one or more long-chain hydrocarbons having on average more than 20 carbon atoms.

11. The method according claim 10, characterized that contacting the fibers, chippings or strands in free flowing form takes place by means of spraying of the wax dispersion.

12. The method according to claim 10, **characterized in that** contacting the fibers, chippings or strands takes place by placing them in water or slurrying them together with the wax dispersion, and, if necessary, the wax dispersion is broken up in order to attach to the fibers, chippings or strands.

13. The method according to at least one of claims 10 to 12, **characterized in that** the wood materials containing fibers, chippings and/or strands are medium-density fiberboards, high-density fiberboards, OSB (Oriented Strand Boards) or chipboards.

14. The method according to at least one of claims 10 to 13, **characterized in that** based on the dry weight of the material 0.5 to 2.5% by weight, of wax solids are introduced.

15. Composition for preparing wood materials, the composition comprising
• fibers, chippings or strands containing or consisting of lignocelluloses,
• at least one binding agent for joining the fibers, chippings or strands together, and
• at least one hydrophobing agent,
**characterized in that** the hydrophobing agent comprises
• from less than 60% by weight to 20% by weight of water as continuous phase,
• from greater than 0.5 to 10% by weight of at least one emulsifier, and
• from greater than 40 to 80% by weight of waxes forming the dispersed phase, wherein
• the waxes consist to greater than 85% by weight of one or more long-chain hydrocarbons having on average more than 20 carbon atoms,
• the waxes have a solidification point of greater than 40 to 150 °C, and
• the dispersed waxes have as solid particles an average particle diameter of 10 to less than 500 nm,
• wherein based on the dry weight of the wood material 0.1 to 5 % by weight of wax solids are introduced.

16. Composition according to claim 15, **characterized in that** the binding agent comprises acid-hardening urea-formaldehyde resins, alkaline hardening phenolformaldehyde resins, PMDI or tannin-formaldehyde resins.

## Revendications

1. Utilisation d'une dispersion de cires en tant qu'agent de traitement hydrophobe pour les lignocelluloses sous forme de fibres, copeaux ou lamelles, dans laquelle la dispersion de cires comprend :
• moins de 60 % en poids à 20 % en poids d'eau à titre de phase continue,
• plus de 0,5 à 10 % en poids d'au moins un émulsifiant et
• plus de 40 à 80 % en poids de cires formant la phase dispersée, dans laquelle
• les cires sont, à plus de 85 % en poids, un ou plusieurs hydrocarbures à longue chaîne avec, en moyenne, plus de 20 atomes de carbone,
• les cires présentent un point de solidification de plus de 40 à 150°C et
• les cires dispersées présentent, en tant que particules solides, un diamètre moyen de particules de 10 à moins de 500 nm,
dans laquelle, en mettant en contact les fibres, les copeaux ou lamelles avec la dispersion de cires pour déposer la cire en tant que cires solides sur les fibres, copeaux ou lamelles et en comprimant, on obtient un matériau de bois comprenant les fibres, les copeaux ou les lamelles et, le cas échéant, d'autres composants et dans laquelle 0,1 à 5 % en poids de cires solides sont inclus par rapport au poids sec du matériau de bois.

2. Utilisation de la dispersion de cires selon la revendication 1, **caractérisée en ce que** la dispersion de cires comprend :
• moins de 50 à 30 % en poids d'eau à titre de phase continue,
• plus de 0,5 à 6 % en poids d'un émulsifiant et
• plus de 50 à 70 % en poids de cires solides à titre de phase dispersée.

3. Utilisation de la dispersion de cires selon au moins une des revendications précédentes, **caractérisée en ce que** les cires sont des hydrocarbures saturés à longue chaîne, des cires de Fischer - Tropsch, des cires de polyoléfine et/ou des cires de paraffine extraites du pétrole.

4. Utilisation de la dispersion de cires selon au moins une des revendications précédentes, **caractérisée en ce que** les hydrocarbures sont, à plus de 60 % en poids, de préférence à plus de 80 % en poids, des n-alcanes.

5. Utilisation de la dispersion de cires selon au moins une des revendications précédentes, **caractérisée en ce que** les cires solides présentent un point de solidification de plus de 40 à 100°C.

6. Utilisation de la dispersion de cires selon au moins une des revendications précédentes, **caractérisée en ce que** les émulsifiants sont des émulsifiants anioniques, de préférence à base d'acides gras, d'acides gras saponifiés et/ou de dérivés d'acides gras, le cas échéant saponifiés.

7. Utilisation de la dispersion de cires selon au moins une des revendications précédentes, **caractérisée en ce que** les particules solides ayant un diamètre moyen de particules de 10 à moins de 250 nm, en particulier de 100 à 200 nm, sont dispersées dans la phase continue.

8. Utilisation de la dispersion de cires selon au moins une des revendications précédentes, contenant plus de 0,5 à moins de 6 % en poids d'émulsifiant.

9. Utilisation de la dispersion de cires selon au moins une des revendications précédentes, **caractérisée en ce que** les émulsifiants mis en oeuvre se composent, à plus de 50 % en poids, par rapport aux émulsifiants et/ou tensioactifs mis en oeuvre, de préférence entièrement, d'acides carboxyliques en C₆ à C₃₂, entièrement ou partiellement, en particulier entièrement, saponifiés, de préférence avec des amines ou des composés aminés.

10. Procédé de traitement hydrophobe de matériaux de bois fabriqués en utilisant des fibres, des copeaux ou des lamelles contenant ou se composant respectivement de lignocelluloses avec une dispersion de cires, **caractérisé en ce que** la dispersion de cires comprend de l'eau, de l'émulsifiant et des cires ayant un point de solidification de plus de 40 à 150°C, dans lequel les cires comprennent un ou plusieurs hydrocarbures à longue chaîne avec, en moyenne, plus de 20 atomes de carbone, et sont dispersées dans la phase continue sous forme de particules solides ayant un diamètre moyen de particules de 10 à moins de 500 nm, et le procédé comprend les étapes suivantes :
(a) la mise à disposition de la dispersion de cires,
(b) la mise en contact des fibres, des copeaux ou des lamelles avec la dispersion de cires pour le dépôt de la cire sur les fibres, copeaux ou lamelles et
(c) la compression en un matériau de bois contenant les fibres, les copeaux ou les lamelles et, le cas échéant, d'autres composants,
dans lequel 0,1 à 5 % en poids de cires solides sont inclus par rapport au poids sec du matériau de bois et dans lequel on met en oeuvre une dispersion de cires comprenant
• moins de 60 % en poids à 20 % en poids d'eau à titre de phase continue,
• plus de 0,5 à 10 % en poids d'au moins un émulsifiant et
• plus de 40 à 80 % en poids de cires formant la phase dispersée, dans laquelle
• les cires sont, à plus de 85 % en poids, un ou plusieurs hydrocarbures à longue chaîne avec, en moyenne, plus de 20 atomes de carbone.

11. Procédé selon la revendication 10, **caractérisé en ce que** la mise en contact des fibres, copeaux ou lamelles s'effectue sous une forme librement écoulable par pulvérisation de la dispersion de cires.

12. Procédé selon la revendication 10, **caractérisé en ce que** la mise en contact des fibres, copeaux ou lamelles avec la dispersion de cires s'effectue plongés ou bien suspendus dans l'eau, et le cas échéant, la dispersion de cires est cassée pour le dépôt sur les fibres, copeaux ou lamelles.

13. Procédé selon au moins une des revendications 10 à 12, **caractérisé en ce que** les matériaux de bois contenant des fibres, copeaux et/ou lamelles sont des panneaux de fibres moyenne densité, des panneaux de fibres haute densité, des OSB (panneaux de fibres orientées) ou des panneaux de copeaux.

14. Procédé selon au moins une des revendications 10 à 13, **caractérisé en ce que** 0,5 à 2,5 % en poids de cires solides, par rapport au poids sec du matériau de bois, sont inclus.

15. Composition pour la fabrication de matériaux de bois, la composition comprenant
• des fibres, des copeaux ou des lamelles contenant ou se composant de lignocelluloses,
• au moins un liant pour l'assemblage des fibres, des copeaux ou lamelles et
• au moins un agent de traitement hydrophobe,
**caractérisée en ce que** l'agent de traitement hydrophobe contient
• moins de 60 % en poids à 20 % en poids d'eau à titre de phase continue,
• plus de 0,5 à 10 % en poids d'au moins un émulsifiant et
• plus de 40 à 80 % en poids de cires formant la phase dispersée, dans laquelle
• les cires sont, à plus de 85 % en poids, un ou plusieurs hydrocarbures à longue chaîne avec, en moyenne, plus de 20 atomes de carbone,
• les cires présentent un point de solidification de plus de 40 à 150°C et
• les cires dispersées présentent, en tant que particules solides, un diamètre moyen de particules de 10 à moins de 500 nm.
• dans laquelle 0,1 à 5 % en poids de cires solides sont inclus par rapport au poids sec du matériau de bois.

16. Composition selon la revendication 15, **caractérisée en ce que** le liant comprend des résines d'urée - formaldéhyde durcissant à l'acide, des résines de phénol - aldéhyde, PMDI ou résines de tanin - formaldéhyde durcissant aux alcalins.
